# EUROPEAN PATENT SPECIFICATION

(11) **EP 2 350 491 B1**
(45) Date of publication and mention of the grant of the patent: **04.05.2016**
(21) Application number: 09748659.1
(22) Date of filing: 04.11.2009
(51) Int. Cl.: F16F 7/10, F16F 7/116, F16F 1/20, F16F 1/22

(54) **RESONANT INERTIAL FORCE GENERATOR HAVING STABLE NATURAL FREQUENCY**
RESONANZTRÄGHEITSKRAFTGENERATOR MIT STABILER EIGENFREQUENZ
GÉNÉRATEUR DE FORCE INERTIELLE RÉSONANT À FRÉQUENCE PROPRE STABLE

(30) Priority: 04.11.2008 US 111280 P
(43) Date of publication of application: 03.08.2011
(73) Proprietor: LORD Corporation, Cary, NC 27511 (US)
(72) Inventor: BADRE-ALAM, Askari, Cary NC 27518 (US); JANOWSKI, Michael, D., Clayton NC 27527 (US)
(74) Representative: Hendry, Niall James
(86) International application number: PCT/US2009/063193
(87) International publication number: WO 2010/053933

(56) References cited:
- EP-A1- 1 780 440
- WO-A1-2004/003403
- DE-A1- 19 741 627
- DE-A1- 19 823 716
- GB-A- 2 344 148
- JP-A- 4 136 538
- JP-A- 8 233 028
- US-A1- 2006 054 738
- US-B1- 6 279 679

## Description

### FIELD

The invention relates generally to methods and apparatus for controlling vibrations of structures. More specifically, the invention relates to a resonant inertial force generator for use in controlling vibrations of a structure.

### BACKGROUND

Resonant inertial force generators are used to actively control vibrations of a structure, such as an aircraft fuselage. The inertial force generator is attached to the structure subject to vibrations and controlled to impart a force on the structure that counteracts the vibrations of the structure. Sensors may be attached to the structure to measure vibrations of the structure. The output of the sensors may be used to control the inertial force generator to generate the force required to counteract the vibrations of the structure. The resonant inertial force generator includes an actuated driven inertial mass attached with a compliant spring. Mechanical resonance occurs at a frequency determined by the inertial mass and the compliance of the spring. If the natural frequency of the mass-spring system decays by a large amount, there would be a decrease in the output force of the inertial force generator, which can affect the system performance. US2006/054738 discloses a force generator having the features recited in the preamble of claim 1.

### SUMMARY

In an embodiment the invention includes a resonant inertial force generator for controlling vibrations of a structure which comprises a compliant spring, an inertial mass coupled to the compliant spring, and an actuator for moving the inertial mass. The compliant spring comprises a stack of flexures and elastomeric shims in alternating arrangement, wherein at least two of said flexures are in said stack, said elastomeric shims bonded to said flexures positioned adjacent thereto, thereby providing for shear within said elastomeric shim during movement of said stack. Said resonant inertial force generator has a natural frequency delay of less than 0.1 Hz over 3,000 hours of operation, and said elastomeric shims provide for reducing wear between said elastomeric shims and said flexures.

In an embodiment the invention includes a method of making an inertial force generator which comprises providing an inertial mass, providing n composite flexures, wherein n is an integer and is greater than 1, providing at least n+1 elastomeric shims, and interleaving the at least n+1 elastomeric shims with the n composite flexures to form a compliant spring comprising an alternating arrangement of flexures and elastomeric shims. The elastomeric shims are bonded to said flexures. The method further includes coupling the inertial mass to the compliant spring and coupling to the inertial mass an actuator capable of moving the inertial mass such that the inertial force generator has a natural frequency decay of less than 0.1 Hz over 3,000 hours of operation.
It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

### BRIEF DESCRIPTION OF DRAWINGS

The accompanying drawings, described below, illustrate typical embodiments of the invention and are not to be considered limiting of the scope of the invention, for the invention may admit to other equally effective embodiments. The figures are not necessarily to scale, and certain features and certain views of the figures may be shown exaggerated in scale or in schematic in the interest of clarity and conciseness.
FIG. 1 is a perspective view of a compliant spring.
FIG. 2 is a perspective view of a shaped compliant spring.
FIG. 3A is a perspective view of a resonant inertial force generator incorporating a plurality of complaint springs.
FIG. 3B is a vertical cross-section of a resonant inertial force generator incorporating a plurality of complaint springs.
FIG. 4 illustrates a test setup configuration for investigating endurance of compliant springs when incorporated in inertial force generators.
FIG. 5 is a comparison of natural frequency decays in a resonant inertial force generator incorporating composite flexures with elastomeric shims as compliant spring and a resonant inertial force generator incorporating composite flexures with metallic shims as compliant spring.
FIG. 6A-D illustrate compliant springs.
FIG. 7A-C illustrate a resonant inertial force generator incorporating a plurality of complaint springs.
FIG. 8A-B are Life Testing Decay plots of resonant inertial force generators such as shown in FIG.7A-C with Hours of Operation along the x-axis and Frequency Decay along the y-axis to show comparisons of natural frequency decays in a resonant inertial force generator such as shown in FIG.7A-C incorporating composite flexures with elastomeric shims as compliant spring as shown in FIG. 6A-D and a comparable resonant inertial force generator incorporating composite flexures with metallic shims as compliant spring.

### DETAILED DESCRIPTION

The invention will now be described in detail with reference to a few preferred embodiments, as illustrated in the accompanying drawings. In describing the preferred embodiments, numerous specific details are set forth in order to provide a thorough understanding of the invention. However, it will be apparent to one skilled in the art that the invention may be practiced without some or all of these specific details. In other instances, well-known features and/or process steps have not been described in detail so as not to unnecessarily obscure the invention. In addition, like or identical reference numerals are used to identify common or similar elements.

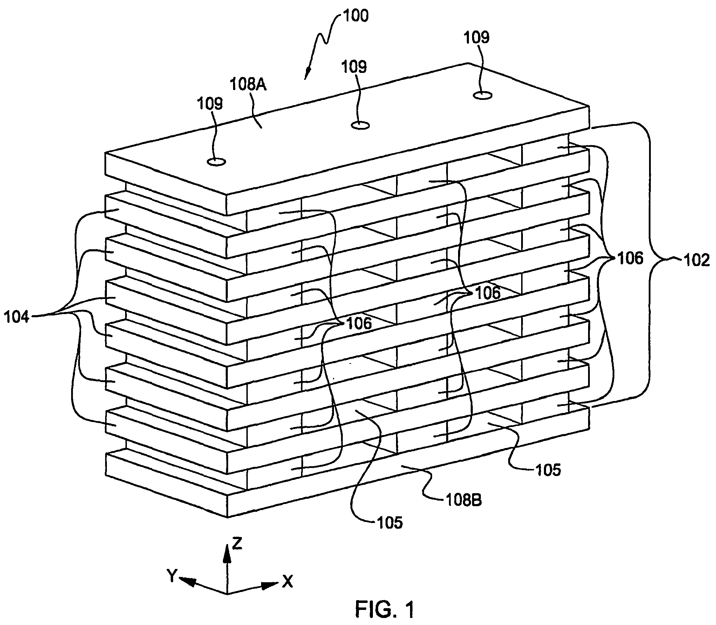

FIG. 1 depicts a compliant spring 100 for use in, for example, a resonant inertial force generator. One or more of the compliant springs 100 may be used to support an inertial mass in the resonant inertial force generator. The compliant spring 100 includes a stack 102 of flexures 104 and elastomeric shims 106 in alternating arrangement. In the illustrated embodiment, the stack 102 includes n flexures 104 and three sets of n+1 elastomeric shims 106, where n is an integer. Typically, n is greater than 1 but may also be 1. In the illustrated example, n is 6. In alternate examples, n can be less than 6 or greater than 6, the minimum value being 2. In a preferred example, n is in a range from 2 to 10. In a preferred example, n is about 9 (from 7 to 11, preferably 8 to 10, more preferably n=9). In general, the stack 102 can have one or more flexures 104 and at least one elastomeric shim 106 bonded to the flexure, with the elastomeric shims between each adjacent pair of flexures 104. Each elastomeric shim 106 is bonded to adjacent flexures 104. The stack 102 may be sandwiched between end plates 108A, 108B. The elastomeric shims 106 adjacent to the end plates 108A, 108B may be bonded or otherwise fixedly attached to the end plates 108A, 108B. Holes 109 running through the end plates 108A, 108B and stack 102 may be provided for receiving fasteners (not shown), which may be used to fasten the compliant spring 100 to other structures. Alternatively, other means of fastening the compliant spring 100 to other structures, such as clamps, may be used. The layers of the compliant spring 100 may be prepared separately and assembled together, including inserting of bonding material between adjacent layers as necessary. Alternately, techniques such as elastomeric mold bonding in a mold may be used to integrate the different layers of the compliant spring 100.

Flexures 104 in the stack 102 are made of a non-elastomeric material. In a preferred embodiment, flexures 104 are made of a composite material. In a more preferred embodiment, the composite material does not include metal, preferably the flexures are non-metallic flexures, preferably a non-homogenous non-metallic material body. Making flexures 104 of a non-metallic non-homogenous composite material results in a lighter compliant spring 100, i.e., in comparison to one in which the flexures 104 are made of a homogenous metallic material. In one embodiment, the non-homogenous composite material is comprised of reinforcing fibers in cured resin/polymer matrix. In another embodiment, the non-homogenous composite material is comprised of reinforcing fibers in a polymer resin. In yet another embodiment, the non-homogenous composite material is comprised of reinforcing fibers in a resin where the resin is polymerized. In another embodiment, the composite material is a carbon-fiber reinforced composite. In a preferred embodiment, the carbon-fiber reinforced composite is comprised of carbon fibers in a cured polymer matrix. In a more preferred embodiment, the carbon-fiber reinforced composite is comprised of carbon fibers in a cured epoxy matrix. Materials for the elastomeric shims 106 are high-fatigue strength, broad temperature range elastomers typically used in elastomeric high capacity laminate (HCL) bearings in aerospace vehicle rotary wing rotor head HCL bearings with such elastomer mold bonded between metal shims. In one example, the elastomeric shims 106 are made of post-vulcanized rubber, preferably with the post-vulcanized rubber post-vulcanized bonded to the non-elastomer composite material. The end plates 108A, 108B may be made of a non-elastomeric material. In one or more embodiments of the invention, the end plates 108A, 108B may be metal flexures end plates. In a preferred embodiment, the end plates 108A, 108B are made of a metallic material, such as aluminum.

In one or more embodiments of the invention, each flexure 104 is in the form of a beam plate, with L_{F} >> W_{F} >> t_{F}, where L_{F} is the length of the flexure, W_{F} is the width of the flexure, and t_{F} is the thickness of the flexure. In one or more embodiments of the invention, each elastomeric shim 106 is also in the form of a beam plate, with L*W >> 2*(L+W)*t, where L is the length of the shim, W is the width of the shim, t is the thickness of the shim, L*W is the load area of the shim, and 2*(L+W)*t is the bulge area of the shim. The shape factor of the shim is defined as the load area divided by the bulge area, i.e., (L*W)/2*(L+W)*t. In a preferred embodiment, the elastomeric shims 106 are designed to have a high shape factor to accommodate high loads perpendicular to the face of the elastomeric shim due to preloading the fastener and to minimize bending in the clamp area (load-bearing area) as the stack of flexures is deflected, while allowing for small transverse deflections of one flexure 104 relative to another. As illustrated in the figures the length is oriented along the x-axis, width along the y-axis, and thickness along the z-axis.

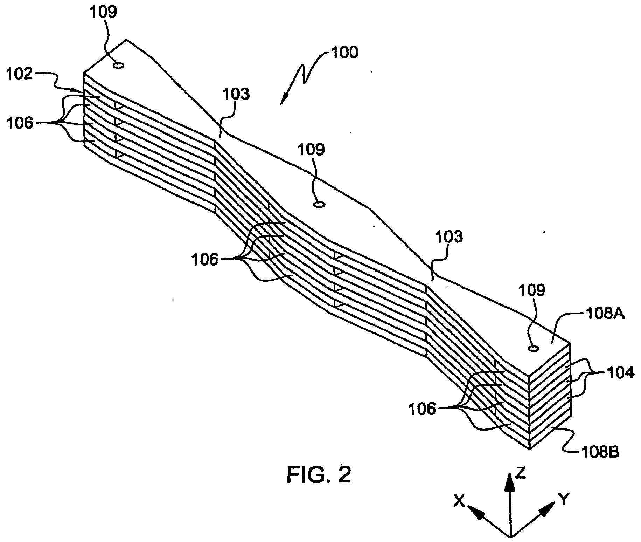

In one or more embodiments of the invention, the elastomeric shims 106 are only located in areas where load will be applied to the stack of flexures 104. In the examples illustrated in FIGS. 1 and 2, these load-bearing areas may be, for example, in the regions including holes 109 which may receive a fastener. In general, the load-bearing areas will depend on the final configuration of the spring 100. In some embodiments, as illustrated in FIGS. 1 and 2, the compliant spring 100 has a cantilever-cantilever beam structure, which results in a characteristic "S" shape as the flexures 104 are deflected. Where the elastomeric shims 106 are located in only the load bearing areas, the elastomeric shims 106 may create gaps 105 between the flexures 104 in the stack 102 which prevent or minimize inter-flexure rubbing as the stack of flexures 104 deflects into the "S" shape under applied load.

In one approach, the thickness t of each elastomeric shim 106 is at least a minimum value which would prevent inter-flexure rubbing for a range of loads applied to the compliant spring 100. The preferred thickness of the elastomeric shim 106 should be minimized to maximize shape factor and will typically be in the range of 0.010 in. to 0.025 in. In another approach, for each elastomeric shim 106 arranged between the flexures 104, the shape factor of the elastomeric shim (i.e., load area/bulge area) is selected to be greater than 1, preferably greater than 2, more preferably greater than 5, most preferably greater than 10. In one embodiment, the shape factor of the elastomeric shim 106 is selected from a range including 4, 8, 12, 16, and 20. The shape factor of the elastomeric shims 106 on the same level of the stack 102 would generally be the same. However, the shape factor of the elastomeric shims 106 on different levels of the stack 102 may be different.

In one or more embodiments of the invention, the lengths of the flexures 104 in the stack 102 are substantially the same. Similarly, the lengths of the elastomeric shims 106 may be substantially the same. The width of the compliant spring 100 may be uniform along the length of the compliant spring 100, where the width of the compliant spring 100 is measured along the y-axis, and the length of the compliant spring 100 is measured along the x-axis. Alternatively, the width of the compliant spring 100 may vary along the length of the compliant spring 100. For example, as shown in FIG. 2, the compliant spring 100 may be tapered to have thinned portions 103, thereby reducing the overall weight of the spring 100.

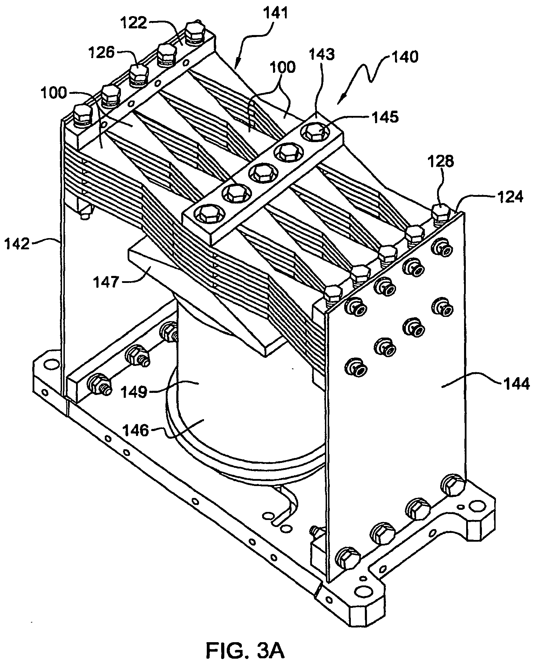

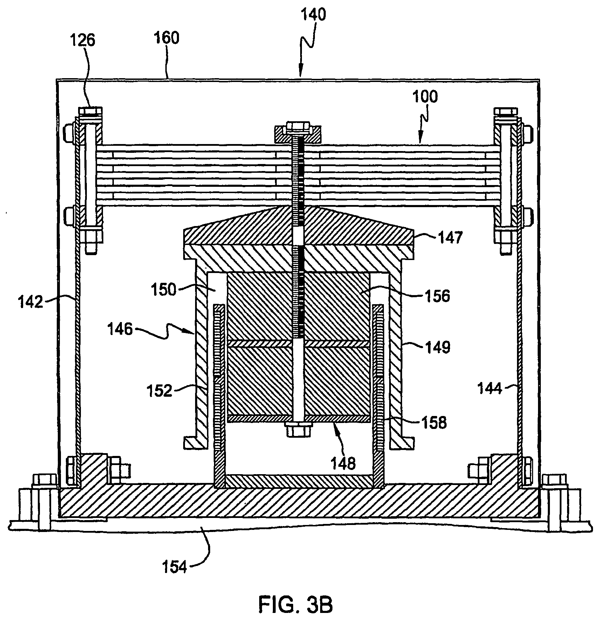

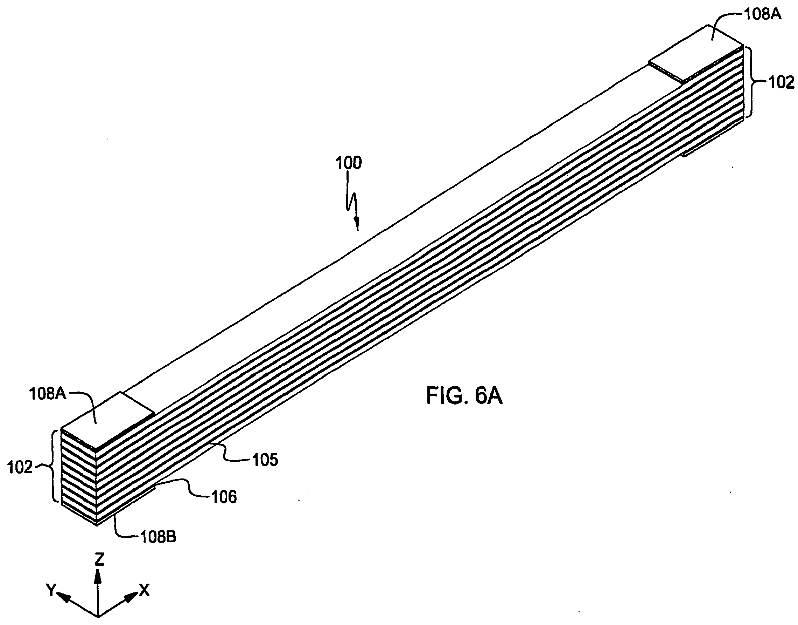

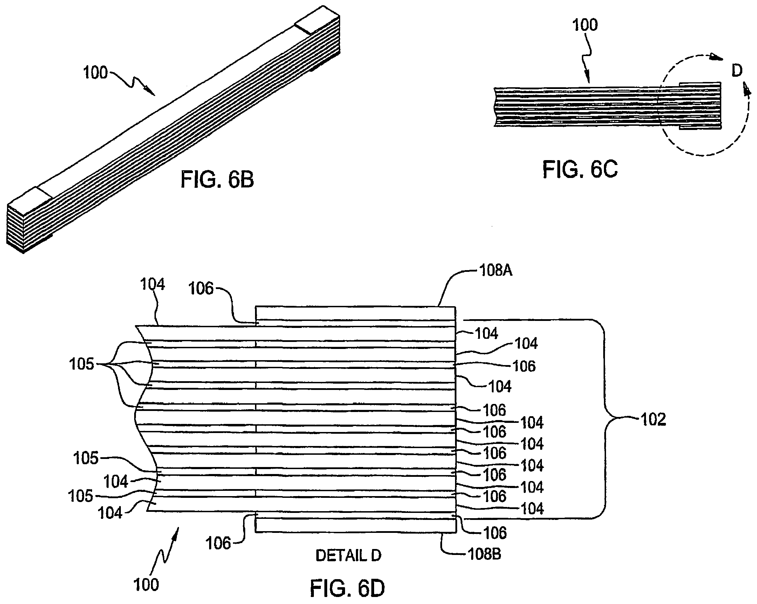

FIGS. 3A and 3B show a resonant inertial force generator 140 including an array 141 of compliant springs 100. The springs 100 in FIGS. 3A and 3B have a shape similar to that in FIG. 2. In alternate examples, the springs 100 in FIGS. 3A and 3B may have a shape similar to that in FIG. 1 or other desired shape. In a preferred embodiment the sides of the springs 100 in the array 141 are coupled together so that the springs 100 function as a single unit. As an example, end plates 122, 124 and bolt/nut connections 126, 128 (or other suitable connections) may be used to couple the distal ends of the springs 100 together. The distal ends of the array 141 of springs 100 are coupled to vertical posts 142, 144. The vertical posts 142, 144 may be metallic flexures. The array 141 of springs 100 supports an inertial mass 146. This may be achieved, for example, by coupling the middle portion of the array 141 of springs 100 to the inertial mass 146 through, for example, a plate member 143 and bolt/nut connections 145. The inertial mass 146 in the illustrated example includes a yoke member 147 and a generally cylindrical body 149, where the generally cylindrical body 149 is coupled to the array 141 of springs 100 through the yoke 147. The inertial mass 146 may be made of metallic material as required for use, for example, as required for use in a "voice coil" type linear motor. In an alternative preferred embodiment such as illustrated in FIG. 6-7, the complaint springs 100 are cantilevered from a mounting base 254 to support the inertial mass 146, preferably with the composite springs not arrayed side by side as a unit.

In an embodiment the inertial force generator 140 includes an actuator 148 (FIG. 3B), which is disposed in a chamber 150 within the generally cylindrical body 149 of the inertial mass 146. The actuator 148 may be operatively coupled to the inertial mass 146 via any suitable means. For example, the actuator 148 may be operatively coupled to the inertial mass 146 via the same bolt/nut connections 145 used to couple the inertial mass 146 to the array 141 of springs 100. In general, a serial coupling is used between the array 141 of springs 100, inertial mass 146, and actuator 148 so that a force applied to the inertial mass 146 by the actuator 148 is transmitted to the array 141 of springs 100, causing the array 141 of springs 100 to move or bend. Motion of the array 141 of springs 100 is transmitted to the vertical posts 142, 144, which are coupled to or mounted on a structure 154 (FIG. 3B). In one example, the structure 154 is part of an aircraft. The structure 154 may be an aircraft fuselage, for example. In one example, the actuator 148 is an electromagnetic actuator or motor. In one example, the actuator 148 includes a permanent magnet 156 circumscribed by an electromagnetic (EM) coil 158. The permanent magnet 156 is mechanically linked to the inertial mass 146. An electrical drive current supplied to the EM coil 158 is converted to a mechanical force that drives or moves the inertial mass 146. The components of the inertial force generator 140 described above may be shrouded within a casing 160, as shown in FIG. 3B.

In operation, the inertial force generator 140 generates a force which destructively interferes with and cancels an unwanted vibration force in the structure 154 to which it is attached. The inertial force generator 140 may include a controller system which receives a command signal and in response to the command signal produces the electrical drive current to drive the actuator 148 at an operating frequency. The controller system may additionally receive a feedback signal and based on the feedback signal adjust the electrical drive current provided to the actuator 148. The inertial mass 146 and spring array 141 constitute a mass-spring system having a natural frequency. The natural frequency may be tuned to be close to the operating frequency of the actuator 148 but generally below the operating frequency of the actuator 148. The structure of the compliant springs 100 is such that the natural frequency of the mass-spring system is stable over the operating life of the inertial force generator 140, typically at least 3,000 hours. In particular, the inventors have found that interleaving of elastomeric shims between composite flexures inhibits decay of the natural frequency of the mass-spring system to an acceptable level. In one embodiment, decay of the natural frequency of the mass-spring system is less than 0.4 Hz over at least 3,000 hours of operation of the inertial force generator. In another embodiment, decay of the natural frequency of the mass-spring system is less than 0.2 Hz over at least 3,000 hours of operation of the inertial force generator. In yet another embodiment, decay of the natural frequency of the mass-spring system is less than 0.1 Hz over at least 3,000 hours of operation of the inertial force generator. Preferably the elastomeric means of inhibiting decay, provides a natural frequency decay inhibited inertial force generator as compared with non-elastomeric shimmed flexures, such as metal shims between composite flexures.

A test was conducted to investigate stability of the natural frequency decay of a mass-spring system incorporating compliant springs such as illustrated in FIG. 1 or FIG. 2. Compliant springs for the test were prepared as follows. Elastomeric shims were cut from molded vulcanized rubber pads with a die. Each elastomeric shim had a thickness of about 10 mils. A spring stack consisting of alternating elastomeric shims and composite flexures were built up with a stainless steel shim on each end of the stack. Post vulcanization bonding of the elastomeric shims to the composite flexures or stainless steel shim was performed to created a bonded assembly. Four of such spring stacks were used to make an array of springs, and the array of springs was installed on an inertial mass as described in FIGS. 3A-3C. For comparison purposes, a similar device was prepared but with metal used as the shim between the composite flexures.

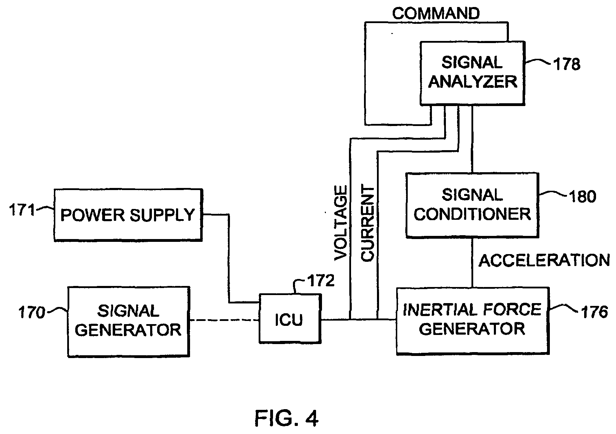

FIG. 4 shows a system for investigating endurance of springs in resonant inertial force generators. During endurance testing of the inertial force generator, frequency sweeps were performed to measure the natural frequency of the inertial force generator. In the configuration shown in FIG. 4, a power supply 171 and a signal generator 170 provide power and command signal, respectively, to an integrated control unit (ICU) 172. The ICU 172 performs amplification and sends control signals to the inertial force generator 176. The inertial force generator 176 represents any inertial force generator under investigation. The ICU 172 was used to set attenuation levels to adjust the drive levels for different channels. The signal analyzer 178 monitors the inertial mass acceleration signals from the inertial force generator 176. The signal conditioner 180 is used to condition the acceleration signals prior to being sent to the signal analyzer 178. During sweep capture, the signal generator 170 was disconnected and the signal analyzer 178 provided the command signal and monitored the command signal, drive current, drive voltage, and inertial mass acceleration. The flexure strain was then calculated using the inertial mass acceleration.

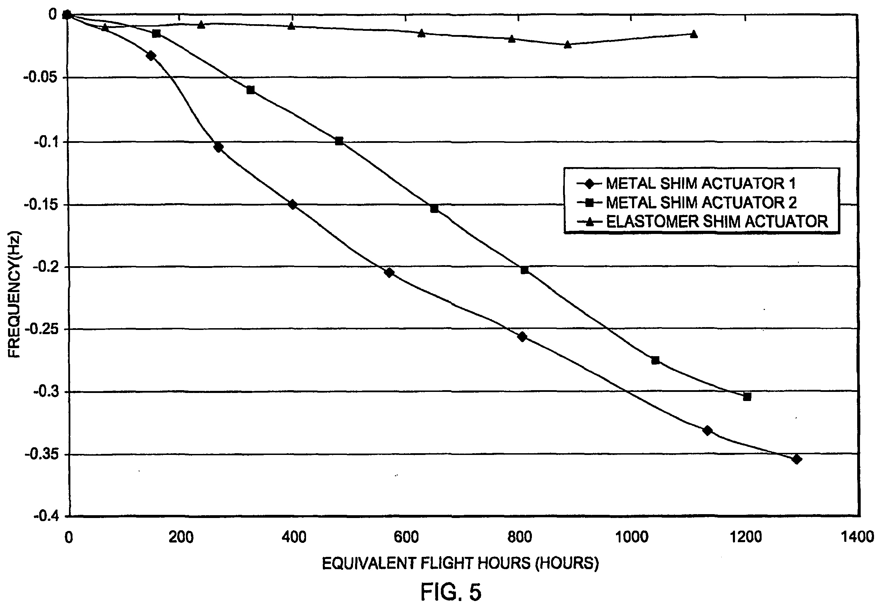

FIG. 5 is a comparison of the natural frequency decay in an inertial force generator with elastomeric shims interleaved between composite flexures (triangular markers), as in the present invention, and an inertial force generator with metallic shims interleaved between composite flexures (square markers). All inertial force generators tested were driven at approximately equal frequencies to result in approximately equal strains in the inertial force generators. FIG. 5 shows that the inertial force generator incorporating compliant springs with elastomeric shims has a much lower natural frequency decay than the one incorporating compliant springs with metallic shims. One plausible reason for this is that when using metal shims, the interface between flexure and metal shim has a small amount of slippage that leads to wear between the flexure and the metal shim. On the other hand, when using elastomeric shims, the elastomeric shim allows this motion to be accommodated by shearing of the elastomer, which is why the elastomer is bonded to the flexure. The endurance tests show that the inertial force generator with the elastomeric shims has a very stable natural frequency in which decay is inhibited. For the version using metallic shims, the total decay exceeded 0.3 Hz in 1200 hours. For the inertial force generator with the elastomeric shims, the natural frequency decay over more than 1,100 hours of operation was nearly zero. Temperature testing was performed on the inertial force generator with elastomeric shims, and the inertial force generator with elastomeric shims showed acceptable performance.

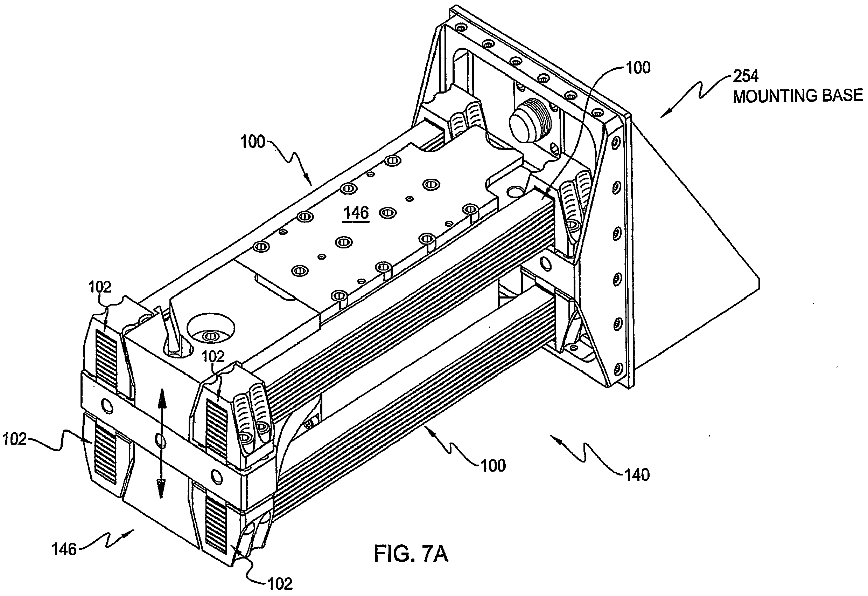

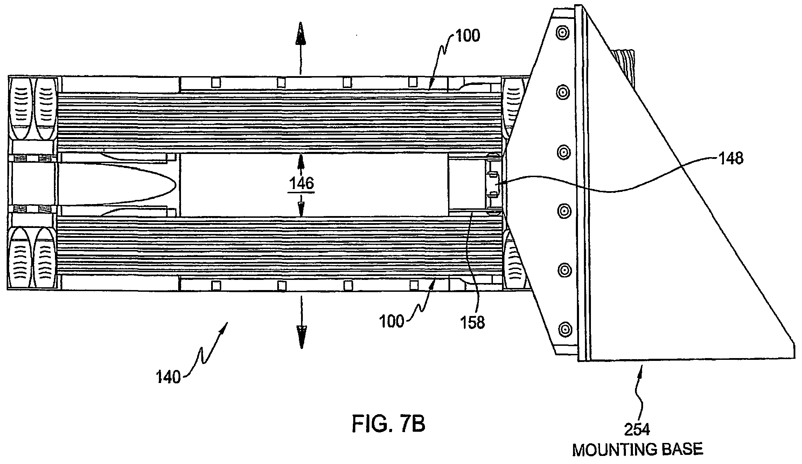

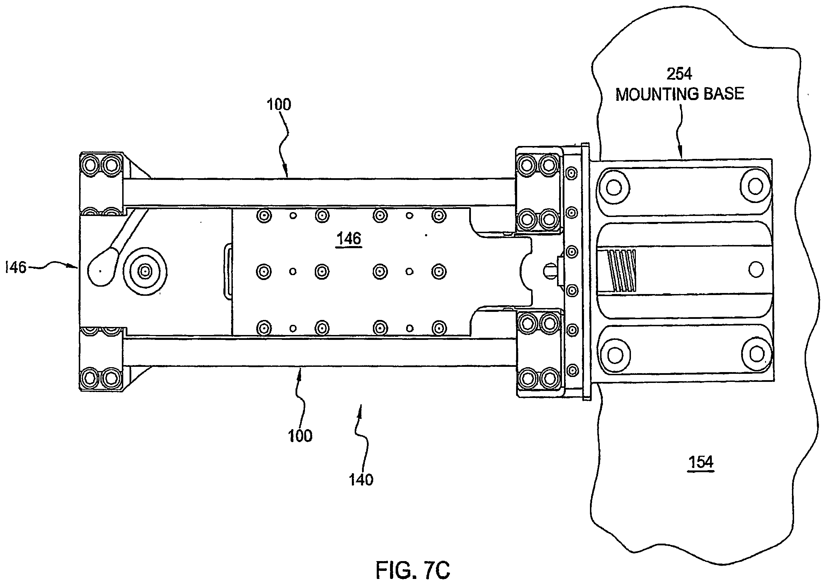

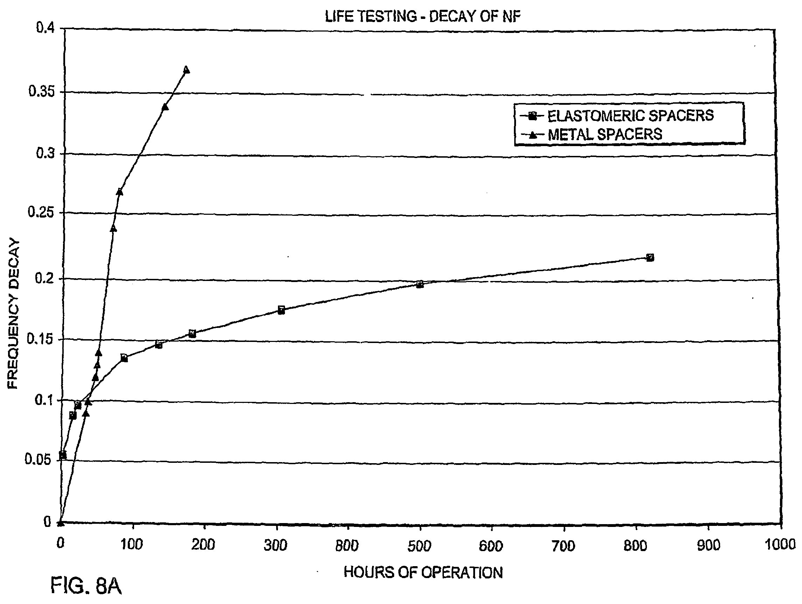

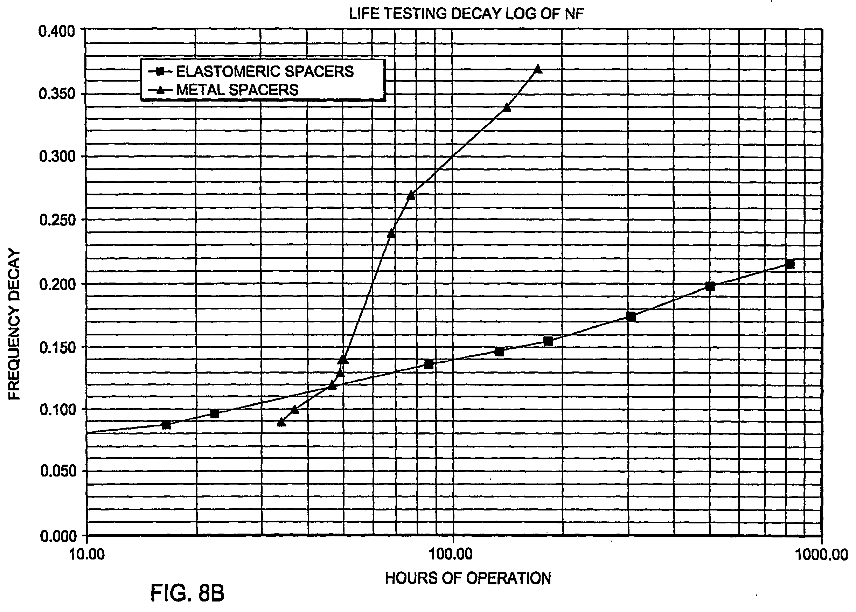

FIG. 6A-D illustrate compliant springs 100 which are preferably used to support an inertial mass such as inertial mass 146 in the electromagnetic actuator resonant inertial force generator 140 illustrated in FIG. 7A-C. The compliant springs 100 include stacks 102 of composite flexures 104 and elastomeric shims 106 in alternating arrangement, with the compliant springs 100 cantilevered from a mounting base 254 to support inertial mass 146 grounded at the opposite ends distal from the mounting base, with the inertial mass 146 disposed in between the compliant springs 100. FIG. 8A-B are Life Testing Decay plots of resonant inertial force generator 140 such as shown in FIG.7A-C utilizing the bonded elastomeric spacer shims 106 bonded between the composite flexures 104 as shown in FIG. 6A-D, with the bonded elastomeric spacer shim resonant inertial force generator natural frequency shown by the squares in the plots. In the FIG. 8A-B Life Testing Natural Frequency Decay plots Hours of Operation are along the x-axis and Frequency Decay is along the y-axis. To show comparisons of natural frequency decays in a resonant inertial force generator such as shown in FIG.7A-C incorporating the composite flexures with elastomeric shims as compliant spring as shown in FIG. 6A-D, a comparable resonant inertial force generator incorporating composite flexures with metallic shims as compliant spring are shown by the triangles in the plots.

It will be apparent to those skilled in the art that various modifications and variations can be made to the invention without departing from the scope of the invention. Thus, it is intended that the invention cover the modifications and variations of this invention provided they come within the scope of the appended claims. It is intended that the scope of differing terms or phrases in the claims may be fulfilled by the same or different structure(s) or step(s).

## Claims

1. A resonant inertial force generator (140) for controlling vibrations of a structure, comprising:
a compliant spring (100);
an inertial mass (146) coupled to the compliant spring (100); and
an actuator (148) for moving said inertial mass (146);
**characterized in that** the compliant spring (100) comprises a stack (102) of flexures (104) and elastomeric shims (106) in alternating arrangement, wherein at least two of said flexures (104) are in said stack (102), said elastomeric shims (106) bonded to said flexures (104) positioned adjacent thereto, thereby providing for shear within said elastomeric shim (106) during a movement of said stack (102); and said resonant inertial force generator (140) has a natural frequency decay of less than 0.1 Hz over 3,000 hours of operation, said elastomeric shims (106) providing for reducing wear between said elastomeric shims (106) and said flexures (104).

2. The resonant inertial force generator of claim 1, wherein said flexures (104) have flexure surfaces adjacent to said elastomeric shims (106), said elastomeric shims (106) being bonded to said flexures (104) on said flexure surfaces.

3. The resonant inertial force generator of claim 1, wherein the actuator (148) is an electromagnetic actuator.

4. The resonant inertial force generator of claim 1, wherein said flexures (104) are comprised of composite beam plates.

5. The resonant inertial force generator of claim 1, wherein said stack (102) is sandwiched between a pair of end plates (108A,108B).

6. The resonant inertial force generator of claim 5, wherein the elastomeric shims (106) at distal ends of the stack (102) are bonded to the end plates (108A,108B).

7. The resonant inertial actuator of claim 1, wherein at least one of the elastomeric shims (106) in the stack (102) has a shape factor greater than 10.

8. The resonant inertial force generator of claim 1, wherein said flexures (104) have flexure surfaces adjacent to an intermediate elastomeric shim (106), said intermediate elastomeric shim (106) being bonded to said flexure surfaces.

9. The resonant inertial force generator of claim 8, wherein each of said intermediate elastomeric shims (106) has a shape factor greater than 10.

10. The resonant inertial force generator of claim 1, wherein said elastomeric shims (106) have a shape factor greater than 10.

11. The resonant inertial force generator of claim 4, wherein said composite beam plates are comprised of a plurality of reinforcing fibers in a cured matrix.

12. The resonant inertial force generator of claim 1, wherein said flexure (104) is a non-metallic composite flexure.

13. A method of making an inertial force generator (140), comprising:
providing an inertial mass (146);
providing n composite flexures (104), wherein n is an integer and is greater than 1; and
providing at least n+1 elastomeric shims (106);
wherein the method further comprises the steps of:
interleaving the at least n+1 elastomeric shims (106) with the n composite flexures (104) to form a compliant spring (100) comprising an alternating arrangement of flexures (104) and elastomeric shims (106), wherein said elastomeric shims (106) are bonded to said flexures (104);
coupling said inertial mass (146) to the compliant spring (100); and
coupling to the inertial mass (146) an actuator (148) capable of moving the inertial mass (146) such that the inertial force generator (140) has a natural frequency decay of less than 0.1 Hz over 3,000 hours of operation.

## Patentansprüche

1. Ein Resonanzträgheitskrafterzeuger (140) zum Steuern der Schwingungen einer Struktur, beinhaltend:
eine nachgiebige Feder (100);
eine träge Masse (146), die an die nachgiebige Feder (100) gekoppelt ist; und
einen Aktor (148) zum Bewegen der trägen Masse (146);
**dadurch gekennzeichnet, dass** die nachgiebige Feder (100) einen Stapel (102) aus Biegeelementen (104) und elastomeren Abstandshaltern (106) in alternierender Anordnung beinhaltet, wobei in dem Stapel (102) mindestens zwei der Biegeelemente (104) vorhanden sind, wobei die elastomeren Abstandshalter (106) mit den Biegeelementen (104), die angrenzend daran positioniert sind, verbunden sind, wodurch während einer Bewegung des Stapels (102) innerhalb des elastomeren Abstandshalters (106) Scherung bereitgestellt wird; und der Resonanzträgheitskrafterzeuger (140) über 3000 Betriebsstunden eine Eigenfrequenzabnahme von weniger als 0,1 Hz aufweist, wobei die elastomeren Abstandshalter (106) für die Reduzierung von Verschleiß zwischen den elastomeren Abstandshaltern (106) und den Biegeelementen (104) sorgen.

2. Resonanzträgheitskrafterzeuger gemäß Anspruch 1, wobei die Biegeelemente (104) angrenzend an die elastomeren Abstandshalter (106) Biegeoberflächen aufweisen, wobei die elastomeren Abstandshalter (106) an den Biegeoberflächen mit den Biegeelementen (104) verbunden sind.

3. Resonanzträgheitskrafterzeuger gemäß Anspruch 1, wobei der Aktor (148) ein elektromagnetischer Aktor ist.

4. Resonanzträgheitskrafterzeuger gemäß Anspruch 1, wobei die Biegeelemente (104) aus Verbundträgerplatten bestehen.

5. Resonanzträgheitskrafterzeuger gemäß Anspruch 1, wobei der Stapel (102) zwischen ein Paar Endplatten (108A, 108B) eingeschoben ist.

6. Resonanzträgheitskrafterzeuger gemäß Anspruch 5, wobei die elastomeren Abstandshalter (106) an distalen Enden des Stapels (102) mit den Endplatten (108A, 108B) verbunden sind.

7. Resonanzträgheitsaktor gemäß Anspruch 1, wobei mindestens einer der elastomeren Abstandshalter (106) in dem Stapel (102) einen Formfaktor größer als 10 aufweist.

8. Resonanzträgheitskrafterzeuger gemäß Anspruch 1, wobei die Biegeelemente (104) angrenzend an einen elastomeren Zwischenabstandshalter (106) Biegeoberflächen aufweisen, wobei die elastomeren Zwischenabstandshalter (106) mit den Biegeoberflächen verbunden sind.

9. Resonanzträgheitskrafterzeuger gemäß Anspruch 8, wobei jeder der elastomeren Zwischenabstandshalter (106) einen Formfaktor größer als 10 aufweist.

10. Resonanzträgheitskrafterzeuger gemäß Anspruch 1, wobei die elastomeren Abstandshalter (106) einen Formfaktor größer als 10 aufweisen.

11. Resonanzträgheitskrafterzeuger gemäß Anspruch 4, wobei die Verbundträgerplatten aus einer Vielzahl von Verstärkungsfasern in einer gehärteten Matrix bestehen.

12. Resonanzträgheitskrafterzeuger gemäß Anspruch 1, wobei das Biegeelement (104) ein nichtmetallisches Verbundbiegeelement ist.

13. Ein Verfahren zum Herstellen eines Trägheitskrafterzeugers (140), beinhaltend:
Bereitstellen einer trägen Masse (146);
Bereitstellen von n Verbundbiegeelementen (104), wobei n eine ganze Zahl und größer als 1 ist; und
Bereitstellen von mindestens n + 1 elastomeren Abstandshaltern (106);
wobei das Verfahren ferner die folgenden Schritte beinhaltet:
abwechselndes Anordnen der mindestens n + 1 elastomeren Abstandshalter (106) mit den n Verbundbiegeelementen (104), um eine nachgiebige Feder (100) zu bilden, die eine alternierende Einrichtung von Biegeelementen (104) und elastomeren Abstandshaltern (106) beinhaltet, wobei die elastomeren Abstandshalter (106) mit den Biegeelementen (104) verbunden sind;
Koppeln der trägen Masse (146) an die nachgiebige Feder (100); und
Koppeln eines Aktors (148) an die träge Masse (146), welcher in der Lage ist, die träge Masse (146) zu bewegen, so dass der Trägheitskrafterzeuger (140) über 3000 Betriebsstunden eine Eigenfrequenzabnahme von weniger als 0,1 Hz aufweist.

## Revendications

1. Un générateur de force inertielle résonant (140) pour maîtriser les vibrations d'une structure, comprenant :
un ressort élastique (100) ;
une masse inertielle (146) couplée au ressort élastique (100) ; et
un actionneur (148) pour déplacer ladite masse inertielle (146) ;
**caractérisé en ce que** le ressort élastique (100) comprend une pile (102) d'éléments flexibles (104) et de cales élastomères (106) en agencement alterné, au moins deux desdits éléments flexibles (104) étant dans ladite pile (102), lesdites cales élastomères (106) étant liées auxdits éléments flexibles (104) positionnés de façon adjacente à celles-ci, permettant de ce fait un cisaillement à l'intérieur de ladite cale élastomère (106) au cours d'un déplacement de ladite pile (102) ; et ledit générateur de force inertielle résonant (140) présente une décroissance de fréquence propre inférieure à 0,1 Hz en 3 000 heures de fonctionnement, lesdites cales élastomères (106) permettant une réduction de l'usure entre lesdites cales élastomères (106) et lesdits éléments flexibles (104).

2. Le générateur de force inertielle résonant de la revendication 1, où lesdits éléments flexibles (104) présentent des surfaces flexibles adjacentes auxdites cales élastomères (106), lesdites cales élastomères (106) étant liées auxdits éléments flexibles (104) sur lesdites surfaces flexibles.

3. Le générateur de force inertielle résonant de la revendication 1, où l'actionneur (148) est un actionneur électromagnétique.

4. Le générateur de force inertielle résonant de la revendication 1, où lesdits éléments flexibles (104) sont constitués de plaques de poutre composites.

5. Le générateur de force inertielle résonant de la revendication 1, où ladite pile (102) est intercalée entre une paire de plaques d'extrémité (108A, 108B).

6. Le générateur de force inertielle résonant de la revendication 5, où les cales élastomères (106) aux extrémités distales de la pile (102) sont liées aux plaques d'extrémité (108A, 108B).

7. L'actionneur inertiel résonant de la revendication 1, où au moins une des cales élastomères (106) dans la pile (102) a un facteur de forme supérieur à 10.

8. Le générateur de force inertielle résonant de la revendication 1, où lesdits éléments flexibles (104) présentent des surfaces flexibles adjacentes à une cale élastomère intermédiaire (106), ladite cale élastomère intermédiaire (106) étant liée auxdites surfaces flexibles.

9. Le générateur de force inertielle résonant de la revendication 8, où chacune desdites cales élastomères intermédiaires (106) a un facteur de forme supérieur à 10.

10. Le générateur de force inertielle résonant de la revendication 1, où lesdites cales élastomères (106) ont un facteur de forme supérieur à 10.

11. Le générateur de force inertielle résonant de la revendication 4, où lesdites plaques de poutre composites sont constituées d'une pluralité de fibres de renforcement dans une matrice durcie.

12. Le générateur de force inertielle résonant de la revendication 1, où ledit élément flexible (104) est un élément flexible composite non métallique.

13. Une méthode de fabrication d'un générateur de force inertielle (140), comprenant :
prévoir une masse inertielle (146) ;
prévoir n éléments flexibles composites (104), où n est un nombre entier et est supérieur à 1 ; et
prévoir au moins n+1 cales élastomères (106) ;
la méthode comprenant de plus les étapes suivantes :
entrelacer les au moins n+1 cales élastomères (106) avec les n éléments flexibles composites (104) pour former un ressort élastique (100) comprenant un agencement alterné d'éléments flexibles (104) et de cales élastomères (106), lesdites cales élastomères (106) étant liées auxdits éléments flexibles (104) ;
coupler ladite masse inertielle (146) au ressort élastique (100) ; et
coupler à ladite masse inertielle (146) un actionneur (148) capable de déplacer la masse inertielle (146) de telle sorte que le générateur de force inertielle (140) présente une décroissance de fréquence propre inférieure à 0,1 Hz en 3 000 heures de fonctionnement.
